# EUROPEAN PATENT SPECIFICATION

(11) **EP 2 494 378 B1**
(45) Date of publication and mention of the grant of the patent: **16.04.2014**
(21) Application number: 10774378.3
(22) Date of filing: 26.10.2010
(51) Int. Cl.: G01V 1/36

(54) **MACHINE, PROGRAM PRODUCT AND METHOD TO DETERMINE A FIRST ARRIVAL OF A SEISMIC TRACE**
MASCHINE, PROGRAMMPRODUKT UND VERFAHREN ZUR BESTIMMUNG DES ERSTEN AUFTRETENS EINER SEISMISCHEN SPUR
MACHINE, PRODUIT DE PROGRAMME ET PROCEDE POUR DETERMINER UNE PREMIERE ARRIVEE D'UNE TRACE SISMIQUE

(30) Priority: 26.10.2009 US 254880 P
(43) Date of publication of application: 05.09.2012
(73) Proprietor: Saudi Arabian Oil Company, Dhahran 31311 (SA)
(72) Inventor: ZHU, Weihong, Dhahran 31311 (SA); KEHO, Timothy, H., Dhahran 31311 (SA)
(74) Representative: Robinson, David Edward Ashdown
(86) International application number: PCT/US2010/054059
(87) International publication number: WO 2011/056551

(56) References cited:
- US-A1- 2005 128 872
- Zuolin Chen and Robert Stewart, CREWES, University of Calgary, Canada: "Multi-window algorithm for detecting seismic first arrivals", 2005 CSEG National Convention , 18 May 2005 (2005-05-18), XP002618840, Retrieved from the Internet: URL:http://www.crewes.org/ForOurSponsors/C onferenceAbstracts/2005/CSEG/Chen_CSEG_200 5-1.pdf [retrieved on 2005-05-18]
- Keho, Timothy; Weihong, Zhu: "Revisiting Automatic First Arrival Picking for Large 3D Land Surveys", 79th SEG Internation Conference , 26 October 2009 (2009-10-26), XP002618841, Retrieved from the Internet: URL:http://scitation.aip.org/getpdf/servle t/GetPDFServlet?filetype=pdf&id=SEGEAB0000 28000001003198000001&idtype=cvips [retrieved on 2009-10-26]

## Description

This patent application is a non-provisional patent application claiming priority to and the benefit of U.S. Provisional Patent Application No. 61/254,880, filed October 26, 2009, titled "Machine, Program Product and Method to Determine a First Arrival of a Seismic Trace", which is incorporated herein by referenced in its entirety.

### BACKGROUND OF THE INVENTION

### 1. Field of the Invention

The present invention relates to the collection and processing of seismic data to facilitate oil and gas production, and more specifically to determining first arrival for a plurality of seismic traces.

### 2. Description of the Prior Art

Oil and gas are often trapped thousands of feet below the earth's surface. To find the oil, geologists and geophysicists typically use either two-dimensional (2D) or three-dimensional (3D) seismic surveys. To perform these seismic surveys, an acoustic wave generated by a shot, e.g., dynamite or a mechanical vibrator, is propagated downward and is refracted back when it encounters a geological discontinuity. This signal is recorded by a geophone as a trace.

To gather high fold surveys, land seismic survey operations typically require placing hundreds to thousands of geophones at locations about the area to be surveyed. When a seismic source is generated, either as an impulse caused by dynamite or a vibration sweep caused by a mechanical apparatus carried by a truck, the seismic reflections are detected by the geophones. The seismic data generated by all the geophones is then transmitted to a central recording system.

The amount of seismic data transmitted to the central recording system may be considerable. For example, a 20-second vibration sweep can generate on the order of 250,000 bits of data. When there are 1,000 geophone channels in use, this translates to 250,000,000 bits of data every 20 seconds or an effective data rate of 12.5 megabits per second. Increasing the number of geophone channels increases the amount of seismic data to be transferred to the central recording system. Many current seismic survey projects have more than 10,000 geophones active at any one time and the requirements for more channels are increasing. In a few years time it is expected that channel counts as high as 100,000 will not be uncommon. These data rates put tremendous strain on traditionally used seismic data processing techniques.

Once the high fold surveys are taken, the seismic data processing of all the collected seismic data begins. One of the processing steps is determining the "first arrival" or "first break" for each of the traces. The first arrival indicates a retraction of the acoustic energy upon encountering a geological discontinuity, and the timing of the first arrival, or first arrival time, is important in determining the depth of the refractor and performing corrections to a stack of seismic traces. Historically, a geophysicist would manually pick the first arrival for each trace of a seismic stack. This process was time consuming, and several auto-picking methods emerged including those using on energy ratios, fractals, and neural networks to automatically determine the first arrivals.

Unfortunately, prior art auto-picking methods are not particularly adapted for use with 3D surveys. For 3D surveys, interactive first arrival picking is common. Using this method, an interpreter sits at a workstation, displays shot gathers, and uses an auto-picker to select first arrivals. Quality control is achieved by interactive editing in the shot, receiver, and offset domains. This process can take months for large 3D surveys, having high channel counts and consisting of millions of traces.

### SUMMARY OF THE INVENTION

An embodiment of the invention is a machine defining an application server, the application server processing seismic data to detect a plurality of first arrivals for a plurality of seismic traces, the application server comprising a processor, executing a program product, stored in a memory accessible by the processor and executable on the processor, for performing a process of picking an initial first arrival from at least one trace of the plurality of seismic traces and a process of refining the initial first arrival pick based upon a comparison of the initial first arrival pick with first arrival pick of traces. The processor performs the steps of: centering a main time window around each of the plurality of first arrivals for the plurality of seismic traces, setting a start of the time window to zero, transforming a portion of the plurality traces in the main time window into a plurality of peak spike traces having a plurality of peak spikes whereby the transforming includes setting all negative portions of the seismic traces to zero and all non-peak portions of the seismic traces to zero, dividing the main window into a plurality of non-overlapping windows, comparing each of the plurality of peak spikes in each of the non-overlapping windows to each other of the plurality of peak spikes in the same non-overlapping window to determine which peak spike in the non-overlapping window has the greatest amplitude, determining a rate of change of the plurality of peak spikes in each of the non-overlapping windows, setting the first arrival for each of the plurality of traces as the peak spike with the highest amplitude in the non-overlapping window with the highest rate of change of the peak spikes, comparing the first arrivals for each of the plurality of traces to the first arrivals for other traces to determine whether the first arrival is a desired, e.g., good, pick, and recalculating all of the first arrivals that are not as desired, e.g., not as good, picks.

Another embodiment of the invention is a computer program product comprising a set of instructions stored in a memory of a computer defining an application server that when executed by the application server cause the application server to perform a process of picking an initial first arrival from at least one trace of the plurality of seismic traces and a process of refining the initial first arrival pick based upon a comparison of the initial first arrival pick with first arrival pick of traces. The set of instructions consists of: centering a main time window around each of the plurality of first arrivals for the plurality of seismic traces, setting a start of the time window to zero, transforming a portion of the plurality traces in the main time window into a plurality of peak spike traces having a plurality of peak spikes by setting all negative portions of the seismic traces to zero and all non-peak portions of the seismic traces to zero, dividing the main window into a plurality of non-overlapping windows, comparing each of the plurality of peak spikes in each of the non-overlapping windows to each other of the plurality of peak spikes in the same non-overlapping window to determine which peak spike in the non-overlapping window has the greatest amplitude, determining a rate of change of the plurality of peak spikes in each of the non-overlapping windows, setting the first arrival for each of the plurality of traces as the peak spike with the highest amplitude in the non-overlapping window with the highest rate of change of the peak spikes, comparing the first arrivals for each of the plurality of traces to the first arrivals for other traces to determine whether the first arrival is a desired, e.g., good, pick, and recalculating all of the first arrivals that are not as desired, e.g., not as good, picks.

Another embodiment of the invention is a computer implemented method for causing a computer, defining a application server, to perform a process of picking an initial first arrival from at least one trace of the plurality of seismic traces and a process of refining the initial first arrival pick based upon a comparison of the initial first arrival pick with first arrival pick of traces. The computer-implemented method comprises the steps of: centering a main time window around each of the plurality of first arrivals for the plurality of seismic traces, setting a start of the time window to zero, transforming a portion of the plurality traces in the main time window into a plurality of peak spike traces having a plurality of peak spikes by setting all negative portions of the seismic traces to zero and all non-peak portions of the seismic traces to zero, dividing the main window into a plurality of non-overlapping windows, comparing each of the plurality of peak spikes in each of the non-overlapping windows to each other of the plurality of peak spikes in the same non-overlapping window to determine which peak spike in the non-overlapping window has the greatest amplitude, determining a rate of change of the plurality of peak spikes in each of the non-overlapping windows, setting the first arrival for each of the plurality of traces as the peak spike with the highest amplitude in the non-overlapping window with the highest rate of change of the peak spikes, comparing the first arrivals for each of the plurality of traces to the first arrivals for other traces to determine whether the first arrival is a desired, e.g., good, pick, and recalculating all of the first arrivals that are not as desired, e.g., not as good, picks.

### BRIEF DESCRIPTION OF THE DRAWINGS

Some of the features and benefits of the present invention having been stated, others will become apparent as the description proceeds when taken in conjunction with the accompanying drawings, in which:
FIG. 1 is a schematic diagram of a seismic surveying system for use in creating a seismic survey according to an embodiment of the invention;
FIG. 2 is a schematic diagram of a seismic surveying system for use in creating a seismic survey according to another embodiment of the invention;
FIG. 3 is a schematic diagram of a seismic surveying system for use in creating a seismic survey according to another embodiment of the invention.

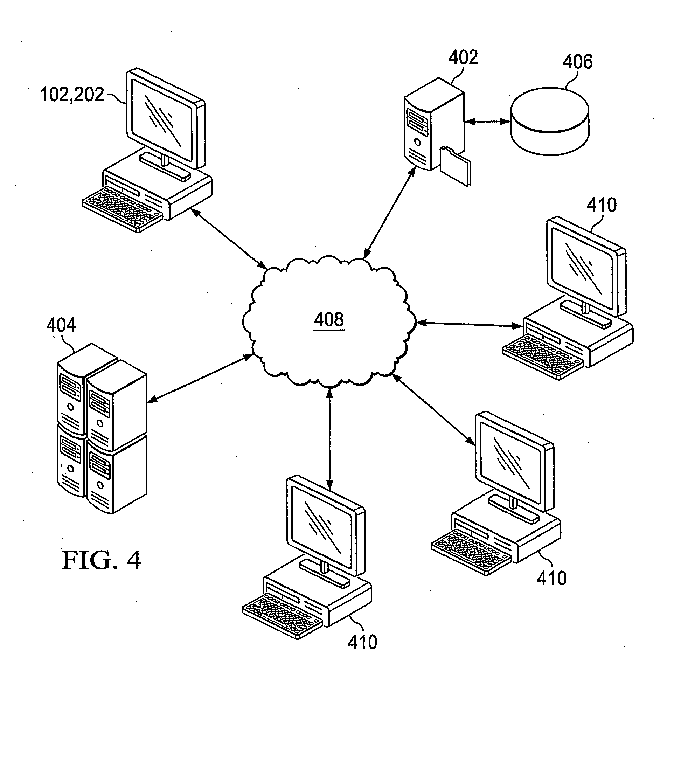

FIG. 4 is a network diagram of a seismic processing system according to an embodiment of the invention;
FIG. 5 is a block diagram of a machine to process seismic data according to an embodiment of the invention;
FIG. 6 is a flow chart of computer program product stored on a machine to process seismic data according to an embodiment of the invention;
FIG. 7 is a block diagram of computer program product stored on a machine to process seismic data according to an embodiment of the invention;
FIG. 8 is a graph of an exemplary seismic trace that can be processed by computer program product stored on a machine to process seismic data according to an embodiment of the invention;
FIG. 9A, FIG. 9B and FIG. 9C are graphs depicting the seismic processing steps performed by computer program product stored on a machine to process seismic data according to an embodiment of the invention
FIG. 10A, FIG. 10B, and FIG. 10C are graphs depicting the seismic processing steps of computer program product stored on a machine to process seismic data according to an embodiment of the invention;
FIG. 11 is a graph of a simplified set of traces depicting a common reflection point and having an ideal relationship between first arrivals according to an embodiment of the invention;
FIG. 12 is graph of a simplified set of traces depicting a common reflection point and having a relationship between first arrivals with some first arrivals falling outside of a predicted range according to an embodiment of the invention.

### DESCRIPTION OF THE INVENTION

The present invention will now be described more fully hereinafter with reference to the accompanying drawings in which embodiments of the invention are shown. This invention may, however, be embodied in many different forms and should not be construed as limited to the illustrated embodiments set forth herein; rather, these embodiments are provided so that this disclosure will be thorough and complete, and will fully convey the scope of the invention to those skilled in the art. Like numbers refer to like elements throughout.

In general, 3D seismic surveys acquire seismic data via closely spaced geophones, e.g. seismograms or receivers, and shot lines (a line of shots) so there are no significant gaps in the subsurface coverage of the seismic survey. To do this on land, shots points and receivers are arranged in an orthogonal relationship, i.e., a grid, along the earth's surface to form a grid of shot/receiver pairs. The area of the grid is divided into bins, which are commonly on the order of 25 m [82 ft] long and 25 m wide; traces are assigned to specific bins according to the midpoint between the shot and the receiver, reflection point or conversion point. Bins are commonly assigned according to common midpoint (CMP), though more complex seismic processing allows for other types of binning. Traces within each bin are then stacked to generate the output for that bin. Thus, the quality of the output of seismic survey each bin is largely dependant upon the number of traces in each bin, or the fold.

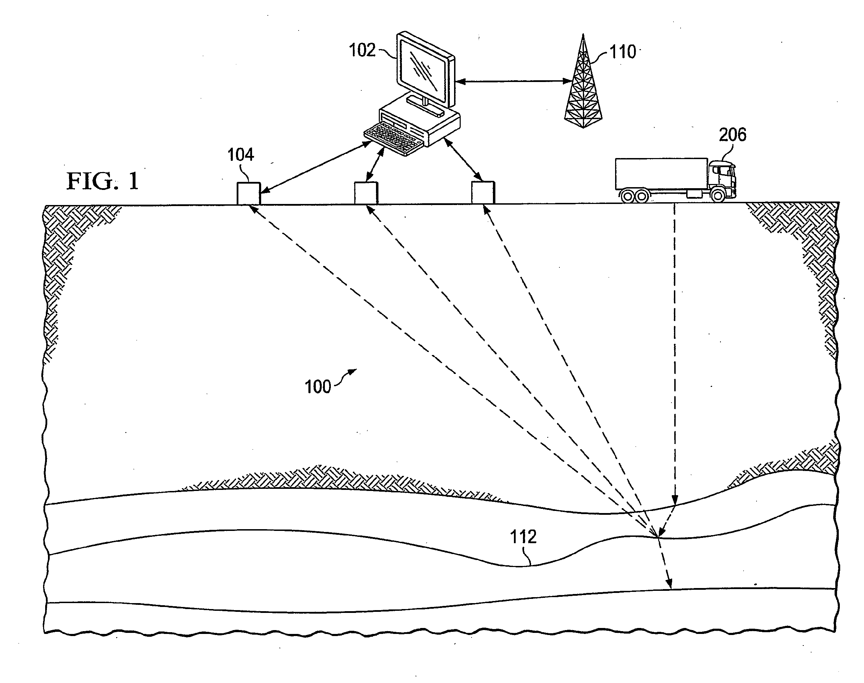

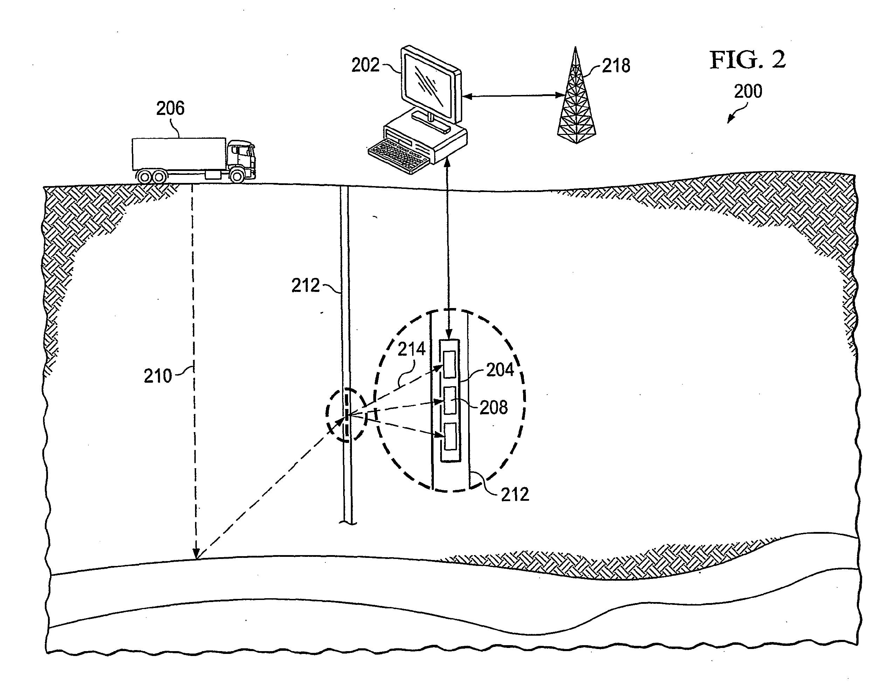

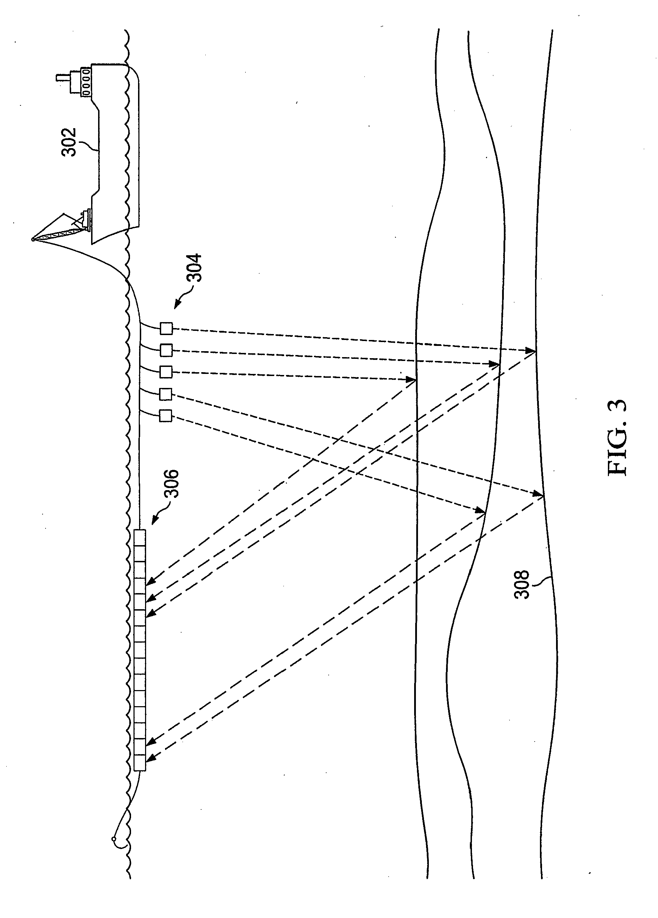

There are many seismic collection techniques currently in use, but regardless of the method for collecting the seismic data, the basic seismic surveying system consists of a plurality of receivers in a known arrangement with a source. For example, a seismic survey can be collected using an array of receivers and an array of sources arranged along a surface of the earth, as shown one-dimensionally in FIG. 1; a downhole tool arranged in at least one existing wellbore, as shown in FIG. 2; or a receiver array and a plurality of source guns can be pulled behind a ship to collect seismic below the ocean floor, as shown one-dimensionally in FIG. 3.

FIG. 1, for example, depicts a land based seismic surveying system 100. The land-based seismic surveying system has a computer/recorder 102, several receivers 104, source 106, and optionally a wireless connection to a remote network 110. The computer/recorder 102, which may be a single computer, a plurality of computers, computer server, etc., is connected to each of the receivers 104 via a plurality of channels (not shown). Optionally, the computer is also connected to source 106 and a wireless antenna 110. The computer/recorder 102 is the "brains" of the data acquisition system and performs control functions of seismic collection from the receivers 104. As such, the computer/recorder can be a computer that records seismic data and performs control functions of the data acquisition, can be a separate computer and digital or analog recorder, or can be a plurality of computers and recorders connected in any combination to aid in the control of the data acquisition as well as recording seismic data. The computer/recorder 102 may also perform data processing on the seismic data, including but not limited to noise suppression, signal enhancement and migration of seismic events to the appropriate location in space pre or post stacking, analysis of velocities and frequencies of reflections, static corrections, deconvolution, normal moveout, dip moveout, and stacking. Optionally, the computer/recorder 102 may also perform the process of first arrival picking according to an embodiment of the invention, and may also control source 106.

As previously mentioned, the computer/recorder 102 is connected to receivers 104, which may be geophones, seismometers, or any other device that is capable of detecting seismic energy in the form of ground motion or a pressure wave in fluid and transforms it to an electrical impulse. The receivers 104, which are, e.g., connected in series to a common channel of a to a multi-channel line(not shown), pick up reflections of energy from beds 112, or underground strata of sedimentary rock or sediment, the energy originating and being generated by the source 106. As is known in the art, the receiver array can be arranged manually in the field or may be carried in an array behind a truck, or any combination thereof. The reflections of energy may be recorded for a plurality of geophones collecting data for a common source point 106. The source 106 propagates a signal into the earth from a specific location above the earth's surface, and may be a mechanical source (vibration signal) carried on a truck or a charge, such as dynamite. As shown in FIG. 1, the energy signal generated by the source 106 is projected into the earth and is reflected from bed 112 to the receivers 106.

Once seismic data is acquired from the receivers 106, the seismic data may be uploaded from computer/recorder 102 and stored in a networked storage (not shown) for later processing. As one skilled in the art will appreciate, antenna 110 represents a plurality of devices that may also wirelessly connect computer/recorder 102 to a central command station, and include both ground antennas, satellites and the like.

FIGS. 2 and 3 depict alternative methods for seismic acquisitions. As shown in FIG. 2, seismic data can be acquired downhole using a seismic tool 204, in a process called vertical seismic acquisition. The seismic tool 204 includes a source, or plurality of sources, 206 and a plurality of receivers 208 connected to a computer/recorder 202, which may be a plurality of computers, servers, or the like. Much like the embodiment above, the computer/recorder 202 collects seismic data and controls the downhole tool. In this embodiment, energy 210 is generated from the source 206, depicted as a mechanical vibration source connected to a truck. The energy 210 from the source 206 is reflected off the bed as reflection signal 214, through the well bore 112, to the receivers 208. The reflected signal 214 is then recorded as seismic data and sent to the computer/recorder 202 for collection in storage 216 or processing by computer/recorder 202. Alternatively, the seismic data may be sent to a central control station (not shown) using a wireless connection, depicted as antenna 218. Finally, as shown in FIG. 3, seismic data may also be collected in a marine environment using a ship 302, a plurality of sources 304, e.g., air guns, and a plurality of receivers 306. Here, the plurality of sources 304 and the plurality of receivers 306 are pulled behind the boat at a depth of a few meters. The plurality of sources 304 fire energy signals into water at pre-determined time intervals, and this energy signal is ultimately reflected from a bed 308 to the receivers 306. To collect 3D seismic data using this embodiment, an array of streamers are used.

Once the seismic data is collected, the seismic data is either processed by the computer/recorder 102, the computer/recorder 202, or a computer on the ship 302 (not shown), or it is sent using, a connection to a local area network (LAN) or wide area network (WAN) 408, to various networked computers that may comprise one of more of file server 402, application server 404, databases 406 and distributed computers 410.

At least one file server 402 may be provided to store the raw, semi-processed or processed seismic data uploaded to the network 408 from computer/recorder 102/202. File server 402 may be network attached storage (NAS), storage area networks (SAN), or direct access storage (DAS), or any combination thereof, comprising, e.g., multiple hard disk drives. File server 402 may also allow various user workstations (not shown) to access and display the seismic data stored thereon for seismic data review, correlation functions and the like. The raw, semi processed and processed seismic data can also be stored in a database 406 on file server 402 with the seismic data and additional information such as a location of the survey, a location of the source, a date and time of seismic data collection, a processor's name, etc., being represented in separate tables, records, or fields in the database. Alternatively, the location of the survey the location of the source, the data and time of the seismic data collection, the processor's name, etc., can be stored in the database, with any one of the raw, semi-processed, or processed data being stored in separate portions of the file server memory. As one skilled in the art will appreciate, file server 402 provides each of the distributed computers 410, application server 404, and the computers 102/202 access to the database 406 through database management software. However, file server 402 may also be connected to a database server (not shown), or the database server may be used to store the seismic data instead of file server 402, and such a configuration is within the scope of this disclosure. For example, the instant invention utilizing a database server would include database management software accessible thereon and might be connected to the network via the file server to handle multiple user requests for data within a database stored on the database server, and such a configuration of the network is within the scope of this disclosure.

Distributed computers 410 and at least one application server 412 provide the computing power of the system, and one or both may be used to perform data processing on the seismic data, including but not limited to noise suppression, signal enhancement and migration of seismic events to the appropriate location in space pre or post stacking, analysis of velocities and frequencies of reflections, static corrections, deconvolution, normal moveout, dip moveout, and stacking. Importantly, either the distributed computers 410 or the application server 404 performs the process of first arrival picking according to an embodiment of the invention. As one skilled in the art will appreciate, the application server may be one or more servers, including, for example, database servers, web servers and other machines, connected by a network, and is not limited to one computer or machine. As one skilled in the art will also appreciate, each of the distributed computers 410 may be used by individual geophysicists at individual workstations to access the seismic data, and the application servers 404 may also store processing software that is loaded to and enables the computers 102/202 or distributed computers 410 to display various files stored therein or data related to the interrelation of each of the distributed computers 410 for any parallel processing of the seismic data by the distributed computers 410.

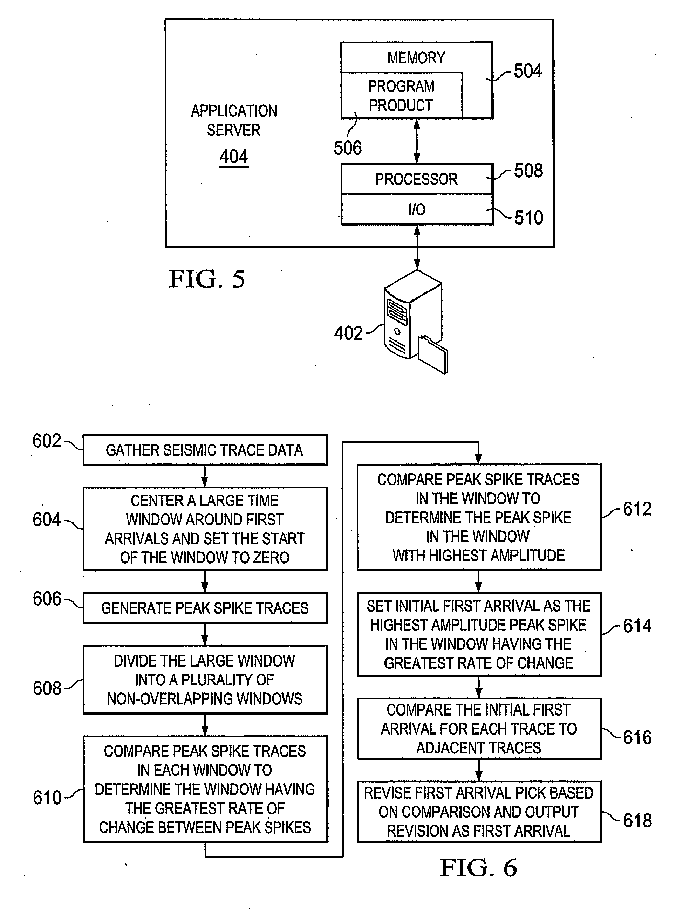

FIG. 5 describes the structure of the application server 404 in detail. Each application server 404 comprises a memory 504, a program product 506, a processor 508 and an input/ output device ("I/O") 510. I/O device 510 connects the application server 404, via the network, to file server 402, and can be any I/O device including, but not limited to a network card/controller connected by a PCI bus to the motherboard, or hardware built into the motherboard to connect the application server 404 to the network 408.

As can be seen, the I/O device is connected to the processor 508. Processor 508 is the "brains" of the application server 404, and as such executes program product 506 and works in conjunction with the I/O device 510 to direct data to memory 504 and to send data from memory 504 to the network. In this way, processor 508 may also make available the program product 506 to the distributed computers 410. Processor 508 can be any commercially available processor, or plurality of processors, adapted for use in an application server, e.g., Intel® Xenon® multicore processors, Intel® micro-architecture Nehalem, AMD Opteron™ multicore processors, etc. As one skilled in the art will appreciate, processor 508 may also include components that allow the application server 404 to be connected to a display [not shown] and keyboard that would allow a user to directly access the processor 508 and memory 504.

Memory 504 stores instructions for execution on the processor 508, and consists of both non-volatile memory , e.g., hard disks, flash memory, optical disks, and the like, and volatile memory, e.g., SRAM, DRAM, SDRAM, etc., as required to process embodiments of the instant invention. As one skilled in the art will appreciate, though memory 504 is depicted on, e.g., the motherboard, of the application server 404, memory 504 may also be a separate component or device, e.g., FLASH memory, connected to the application server. Memory 504 may also store applications that the distributed computers 410 can access and run on the application server 404. Importantly, memory 504 stores the program product of the instant invention.

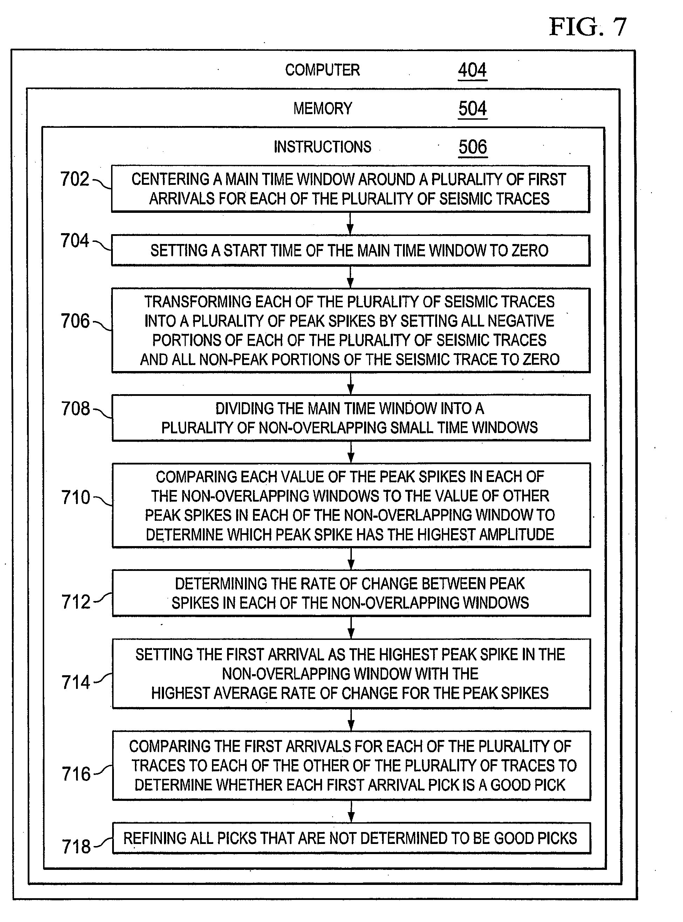

The program product is described in more detail in reference to FIG. 7. As can be seen the application server 404, having memory 504 thereon and storing instructions 506, executes the following steps: retrieving a plurality of seismic traces (step 602), centering a main time window around a plurality of potential first arrivals for the plurality of seismic traces (step 604); setting the start of the time window to zero (step 606); transforming the traces in the time window to a "peak spike traces" by e.g., setting all negative portions of the seismic trace to zero and all non-peak portions of the seismic trace to zero and creating a spike at the highest amplitude of the peak, i.e., the portion of the trace that is positive, but has a zero rate of change value (step 608); dividing the peak spike traces into a plurality of non-overlapping windows (step 610); comparing each value of the peak spikes in each of the non-overlapping windows to the value of other peak spikes in the same window to determine which peak spike in the window has the greatest amplitude (step 612); determining the rate of change between the peak spikes in each of the windows (step 614); setting the first arrival as the spike with the highest amplitude in the window with the highest rate of change of the peak spikes (step 616); comparing the first arrivals for each of the plurality of traces to the first arrivals for other traces to determine whether the first arrival pick is a desired, e.g., good, pick (step 618); and refining all picks that are not as desired, e.g., not as good, picks (step 620).

Operably, the machine, program product and computer-implemented methods of an embodiment of the instant invention manipulate waveform data to automatically pick the first arrival of a seismic trace. The first arrival may be determined as part of the overall processing of the seismic data. For example, seismic data may be processed by removing the bad seismic traces, ordering the seismic traces so that each group of traces maps a common reflection point, and then picking the first arrival of the seismic traces to perform filtering techniques that will remove surface waves and direct arrivals from the traces. Other processing steps include lining up the reflection points based upon correction of the travel time of the seismic data, summing the lined up signals to amplify the reflected signal, shrinking the reflected signal using, e.g., deconvolution or frequency filtering, and then interpretation of the wave form. As one skilled in the art will appreciate, all of the processing techniques above can be performed using the same program product or different program products for one or more of the enumerated steps. And, while the machine, program product and computer-implemented methods of the instant invention are directed to the technique of picking the first arrivals of the seismic waveforms, the technique of picking first arrivals may comprise a discrete program product, a component or module of a program product or a set of instructions that is part of a larger set of computer instructions in the component or module.

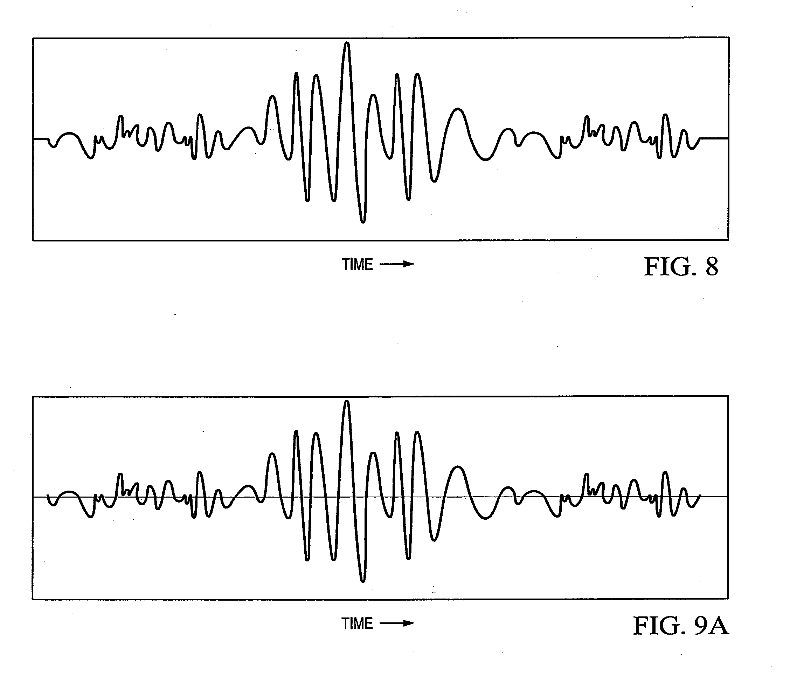

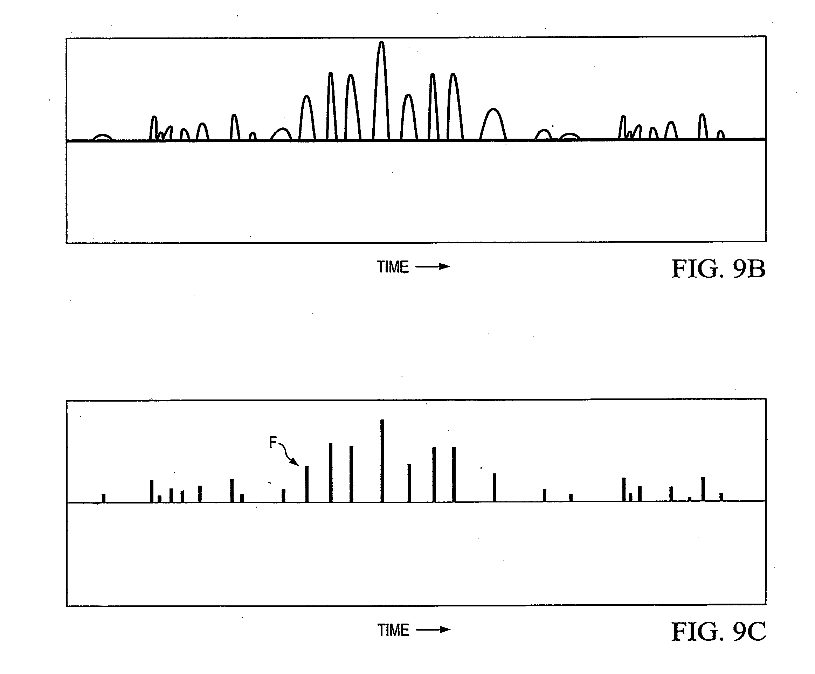

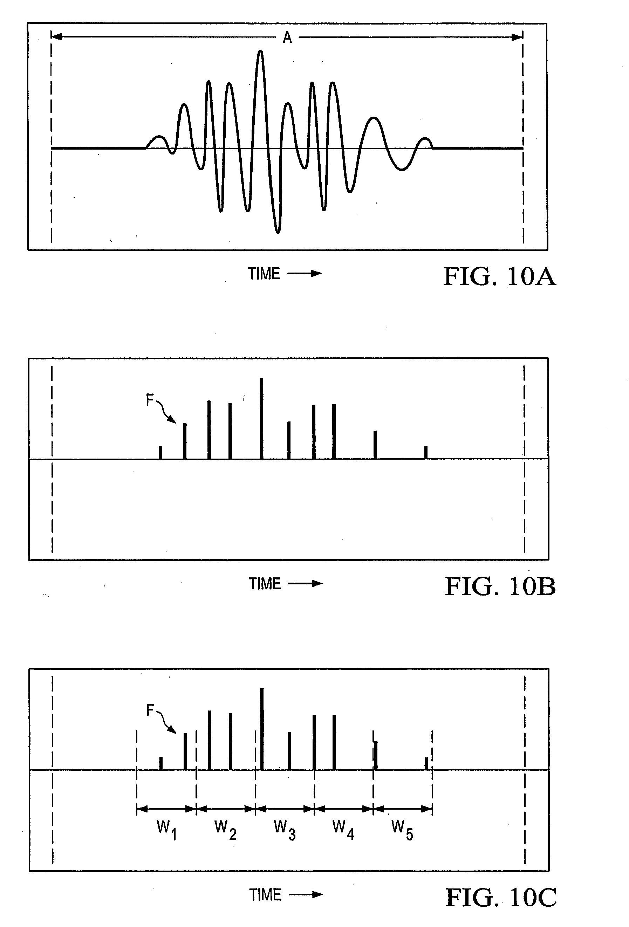

The steps employed by the machine, program product and computer-implemented methods of picking first arrivals are shown with reference to FIGS. 7-12. First, seismic trace data is gathered using the methods described above and the applications server 404 retrieves the gathered data (Step 702). The seismic data retrieved may consist of a single seismic trace, or a plurality of traces grouped by a common reflection point. A single seismic trace is shown in FIG. 8. Once the seismic traces are retrieved, the machine, program product and computer-implemented methods of the invention center a time window around the "first activity" of the trace or plurality of traces (step 704). In other words, the machine, program product and computer-implemented method centers a large time window A around the part of the trace that includes wave data that is greater than a noise threshold, as shown in FIGS. 9A and 10A. Such a time window may have a duration of, for example, 800 milliseconds. Once the large time window is set, the waveform is transformed into a plurality of peak spike traces by, e.g., setting all negative and non-peak values to zero (step 706). As shown in FIG. 9B the non-positive values are set to zero, and the positive portion of the waveform is used to determine the "peak spike". The peak spike trace of the waveform of FIGS. 9A and 10A is shown in FIGS. 9C and 10B, respectively. As is clear, the peak spike is essentially a spike with an amplitude being each positive peak of the trace in the window.

As shown in FIG. 10C, the main window having the peak spike trace, or plurality of peak spike traces, is then divided into a plurality of windows, for example, W₁ W₂, W₃, W₄, and W₅ (step 708). While there may be more sub-windows, some embodiments of the invention divide the large window A into 5 sub-windows having a duration of 160 milliseconds. Each of the peak spikes in each of the windows W₁ W₂, W₃, W₄, and W₅, are then compared to determine which of the peak spikes in each window has the greatest amplitude, G, (step 710). Once the program product determines which peak spikes have the greatest amplitude, the program product determines which of the windows has the highest rate of change in peak spike amplitude (step 712). The initial first arrival, F, is set at the highest amplitude peak spike in the window having the greatest rate of change of peak spike amplitudes (step 714).

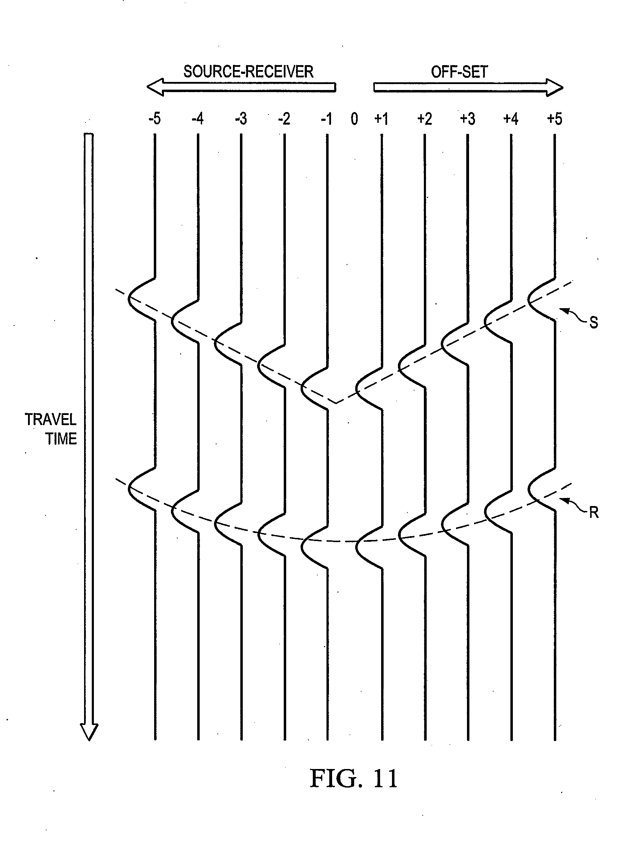

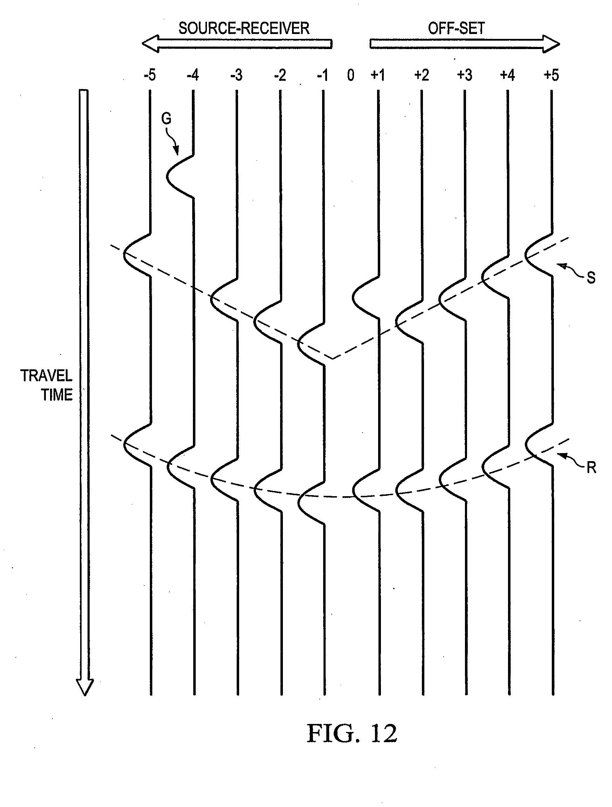

Once the first arrival F is determined for each trace, the machine, program product and method compares the first arrival F for the traces to each of the other traces for (step 716). A graph of comparison waveforms for first arrivals is shown with reference to FIG. 11. Here, a plurality of simplified traces, each indicative of the same reflection point, where the first arrival waveform is represented as a single wave, S, for each arrival and a reflection waveform, **R**, is represented as a reflection point, is shown. As can be seen, ideal first arrivals form a v-shaped pattern indicative of a travel time delay between the reflection point and shot point. And, with large data volumes, this pattern becomes more pronounced. As shown in FIG. 12, irregular first arrival picks G are apparent as those falling outside this v-shaped pattern, within certain predetermined tolerances.

In practice, irregular first arrival picks may not be as graphically noticeable as G in FIG. 12, and may determined mathematically by the program product, i.e., through signal processing techniques. Thus, irregular picks are determined using the average time the adjacent initial picks are recorded, and extrapolating therefrom a time a trace should record its first arrival. If a first arrival is picked that does not occur at the predictive time, then it is judged a "bad pick". If it is determined that the initial pick is a "bad pick", the computer program product uses a trace that occurs around the predictive time as the first arrival. Alternatively, it can be mathematically determined whether or not a pick is a good pick is whether the first arrival pick, tracked from both sides, or falls into a predictive pattern based upon the time differences between first arrival picks (see FIG. 10). Such a time difference between first arrivals may be, for example, 32 milliseconds. For example, 5-9 traces in front and behind a first arrival may chosen to determine whether or not the pick is a good first arrival pick using this method.

As one skilled in the art will recognize, though the relationship between first arrivals is shown graphically in the figures, each of the first arrivals are in a mathematical relationship with each of the other first arrivals, i.e., the relationship is defined by receiver and shot point locations with respect to the reflection. This means that large data volumes can be processed to determine which of the first arrival picks lie outside of a range where the first arrival pick should lie. For instance, G, depicted in FIG. 12, lies outside the bounds it would be expected to lie given the source/receiver offset location. And, the determination that G is not a "good pick" can be made using the large data volumes to determine a predictive range for first arrivals for a particular offset location. If a first arrival falls inside this predictive range, it is a desired, e.g., good, pick; but if a pick falls outside of this range it is not a desired, e.g., not a good, pick.

Once the first arrivals are chosen, additional processing, i.e., filtering, lining up the waveforms, stacking, deconvolution and the like can begin. As one skilled in the art will appreciate, the comparison of first arrivals may occur before or after any portion of the waveform is muted or filtered, the initial muting being subject to revision based upon the comparison of the first arrivals, and both possible embodiments are within the scope of this disclosure.

As one skilled in the art will appreciate, there are many modifications to the exemplary embodiments described above that are within the scope of this disclosure, including the implementation of the method on a single "super computer" or on a plurality of distributed computers, with each distributed computer having a structure similar to the application server depicted in FIG. 5. Moreover, specific models of computer equipment including specifications for servers, memory and processors are described by way of example only and should in no way be deemed to limit the disclosure or claims. In addition, while 2D surveys commonly contain numerous widely spaced shot lines acquired orthogonally to the strike of geological structures and a minimum of lines acquired parallel to geological structures to allow line-to-line correlation of the seismic data and interpretation and mapping of structures, which is less computationally intense that the 3D seismic method described herein, it is further contemplated that the enclosed methods can be used for all seismic data, including 2D seismic data.

The drawings and specification have disclosed typical embodiments of the invention, and although some specific terms are employed, the terms are used in a descriptive sense only and not for the purposes of limitation. The invention has been described in considerable detail with specific reference to these illustrated embodiments. It will be apparent, however, that various modifications and changes can be made within the scope of the invention as described in the foregoing specification and as defined in the attached claims.

## Claims

1. A machine defining an application server (404), the application server (404) adapted to process seismic data to detect a plurality of first arrivals for a plurality of seismic traces, the application server (404) further being adapted to execute a program (506), stored in a non-transitory memory (504) of the application server (404), the program (506) performing a process ofpicking an initial first arrival for at least one trace of the plurality of seismic traces and a process of refining the initial first arrival pick based upon a comparison of the initial first arrival pick with first arrival picks for adjacent traces, the program (506) comprising a set of instructions for performing the steps of:
centering a main time window around a plurality of possible first arrivals for the plurality of seismic traces,
setting a start of the time window to zero,
transforming a portion of the plurality traces in the main time window into a plurality of peak spike traces having a plurality of peak spikes, the transforming including at least setting all negative portions of the seismic traces to zero and all non-peak portions of the seismic traces to zero,
dividing the main window into a plurality of non-overlapping windows,
comparing each of the plurality of peak spikes in each of the non-overlapping windows to determine which peak spike in the non-overlapping window has the greatest amplitude,
determining a rate of change of the plurality of peak spikes in each of the nonoverlapping windows,
setting a first arrival for each of the plurality of traces as the peak spike in the non-overlapping window having the highest rate of change in amplitude and the highest amplitude of the plurality of peak spikes,
comparing the first arrival for each of the plurality of traces to first arrivals for adjacent traces to determine whether the first arrival is a desired pick, and
recalculating all of the first arrivals that are not desired picks.

2. A machine as defined in Claim 1, further **characterized by** having:
a database (406) stored in the non-transitory memory (504) of the application server (404) to store each of the seismic traces in pre-determined fields, the fields being selected from a group including date, time, processor, shot point location and receiver location.

3. A machine as defined in any of Claims 1-2, further **characterized in that** the program (506) further performs the step of:
using the first arrival to filter the plurality of traces so that any signal noise in the plurality of traces is muted.

4. A machine as defined in any of Claims 1-3, further **characterized in that** the program (506) compares the first arrivals for each of the plurality of traces generated from a common reflection point to determine whether the first arrival is the desired pick.

5. A machine as defined in Claim 4, further **characterized in that** the first arrival for each of the plurality of traces for the common reflection point are in a mathematical relationship to each other and the mathematical relationship being used to determine which of the first arrivals are desired pricks.

6. A machine as defined in any of Claims 1-5, further **characterized in that** the program (506) further performs the step of:
stacking each of the plurality of traces for a single reflection point to generate a single trace.

7. A computer implemented method for causing a computer, defining an applications server (404), to perform a process of picking an initial first arrivals from at least one trace of the plurality of seismic traces and a process of refining the initial first arrival pick based upon a comparison of the initial first arrival pick with first arrival pick for adjacent traces, the computer-implemented method **characterized by** including the steps of:
centering a main time window around a plurality of possible first arrivals for the plurality of seismic traces,
setting a start of the time window to zero,
transforming a portion of the plurality traces in the main time window into a plurality of peak spike traces having a plurality of peak spikes, the transforming including at least setting all negative portions of the seismic traces to zero and all non-peak portions of the seismic traces to zero,
dividing the main window into a plurality of non-overlapping windows,
comparing each of the plurality of peak spikes in each of the non-overlapping windows to determine which peak spike in the non-overlapping window has the greatest amplitude,
deternaining a rate of change of the plurality of peak spikes in each of the non-overlapping windows,
setting a first arrival for each of the plurality of traces as the peak spike in the non-overlapping window having the highest rate of change in amplitude and the highest amplitude of the plurality of peak spikes,
comparing the first arrival for each of the plurality of traces to first arrivals for adjacent traces to determine whether the first arrival is a desired, pick.

8. A computer implemented method as defined in Claim 7, further **characterized by** including the step of:
storing each of the seismic traces in a database (406) having pre-determined fields, the fields being selected from a group including date, time, processor, shot point location and receiver location.

9. A computer implemented method as defined in any of Claims 7-8, further **characterized by** including the step of:
using the first arrival to filter the plurality of traces so that any signal noise in the plurality of traces is muted.

10. A computer implemented method as defined in any of Claims 7-9, further **characterized in that** the first arrivals for each of the plurality of traces separated from a common reflection point are compared to determine if the first arrival is the desired pick.

11. A computer implemented method as defined in Claim 10, further **characterized in that** the first arrivals for each of the plurality of traces for the common reflection point are in a mathematical relationship to each other and the mathematical relationship is used to determine which of the first arrivals are desired picks.

12. A computer-implemented method as defined in any of Claims 7-11, further **characterized by** including the step of:
stacking each of the plurality of traces for a common reflection point to generate a single trace.

13. A computer implemented method as defined in any of Claims 7-12, further **characterized by** including the step of:
recalculating all of the first arrivals that are not desired picks.

14. A computer program (506) comprising a set of instructions stored in a non-transitory memory (504) of a computer defining an application server (404) for performing a process of picking an initial first arrival from at least one trace of the plurality of seismic traces and a process of refining the initial first arrival pick based upon a comparison of the initial first arrival pick with first arrival picks of adjacent traces, the set of instructions when executed by the application server (404) causing the application server (404) to perform the steps as defined in any of Claims 7-13.

## Patentansprüche

1. Maschine, die einen Anwendungsserver (404) definiert, wobei der Anwendungsserver (404) dafür eingerichtet ist, seismische Daten zu verarbeiten, um eine Vielzahl von Erstankünften für eine Vielzahl von seismischen Spuren zu ermitteln, wobei der Anwendungsserver (404) ferner dafür eingerichtet ist, ein Programm (506) auszuführen, das in einem nichtflüchtigen Speicher (504) des Anwendungsservers (404) gespeichert ist, wobei das Programm (506) einen Prozess des Auswählens einer Anfangserstankunft für mindestens eine Spur aus der Vielzahl von seismischen Spuren und einen Prozess des Verfeinerns der Anfangserstankunftsauswahl auf der Grundlage eines Vergleichs der Anfangserstankunftsauswahl mit Erstankunftsauswahlen für benachbarte Spuren durchführt, wobei das Programm (506) eine Menge von Anweisungen zum Durchführen der folgenden Schritte umfasst:
Zentrieren eines Hauptzeitfensters um eine Vielzahl von möglichen Erstankünften für die Vielzahl von seismischen Spuren,
Nullsetzen eines Anfangs des Zeitfensters,
Transformieren eines Abschnitts der Vielzahl von Spuren im Hauptzeitfenster in eine Vielzahl von Spitzenwert-Nadelimpulsspuren mit einer Vielzahl von Spitzenwert-Nadelimpulsen, wobei das Transformieren mindestens einschließt: Nullsetzen aller negativen Abschnitte der seismischen Spuren und Nullsetzen aller Nicht-Spitzenwertabschnitte der seismischen Spuren,
Teilen des Hauptfensters in eine Vielzahl von nicht überlappenden Fenstern,
Vergleichen jedes aus der Vielzahl von Spitzenwert-Nadelimpulsen in jedem der nicht überlappenden Fenster, um zu bestimmen, welcher Spitzenwert-Nadelimpuls in dem nicht überlappenden Fenster die größte Amplitude hat,
Bestimmen einer Änderungsgeschwindigkeit der Vielzahl von Spitzenwert-Nadelimpulsen in jedem der nicht überlappenden Fenster,
Setzen einer Erstankunft für jede aus der Vielzahl von Spuren als denjenigen Spitzenwert-Nadelimpuls im nicht überlappenden Fenster, der die höchste Amplituden-Änderungsgeschwindigkeit und die höchste Amplitude der Vielzahl von Spitzenwert-Nadelimpulsen hat,
Vergleichen der Erstankunft für jede aus der Vielzahl von Spuren mit Erstankünften für benachbarte Spuren, um zu bestimmen, ob die Erstankunft eine erwünschte Auswahl ist, und
Neuberechnen aller derjenigen Erstankünfte, die keine erwünschten Auswahlen sind.

2. Maschine nach Anspruch 1, ferner **dadurch gekennzeichnet, dass** sie hat:
eine Datenbank (406), die im nichtflüchtigen Speicher (504) des Anwendungsservers (404) gespeichert ist, um jede der seismischen Spuren in vorbestimmten Feldern zu speichern, wobei die Felder aus einer Gruppe ausgewählt werden, die Datum, Zeit, Prozessor, Schusspunktstandort und Empfängerstandort einschließt.

3. Maschine nach einem der Ansprüche 1-2, ferner **dadurch gekennzeichnet, dass** das Programm (506) ferner den folgenden Schritt durchführt:
Verwenden der Erstankunft, um die Vielzahl von Spuren zu filtern, so dass jegliches Signalrauschen in der Vielzahl von Spuren unterdrückt wird.

4. Maschine nach einem der Ansprüche 1-3, ferner **dadurch gekennzeichnet, dass** das Programm (506) die Erstankünfte für jede aus der Vielzahl von Spuren, die von einem gemeinsamen Reflexionspunkt erzeugt wurden, vergleicht, um zu bestimmen, ob die Erstankunft die erwünschte Auswahl ist.

5. Maschine nach Anspruch 4, ferner **dadurch gekennzeichnet, dass** die Erstankünfte für jede aus der Vielzahl von Spuren für den gemeinsamen Reflexionspunkt in mathematischer Beziehung zueinander stehen und die mathematische Beziehung verwendet wird, um zu bestimmen, welche der Erstankünfte erwünschte Auswahlen sind.

6. Maschine nach einem der Ansprüche 1-5, ferner **dadurch gekennzeichnet, dass** das Programm (506) ferner den folgenden Schritt durchführt:
Überlagern aller aus der Vielzahl von Spuren für einen einzelnen Reflexionspunkt, um eine einzelne Spur zu erzeugen.

7. Computerimplementiertes Verfahren zum Bewirken, dass ein Computer, der einen Anwendungsserver (404) definiert, einen Prozess des Auswählens einer Anfangserstankunft für mindestens eine Spur aus der Vielzahl von seismischen Spuren und einen Prozess des Verfeinerns der Anfangserstankunftsauswahl auf der Grundlage eines Vergleichs der Anfangserstankunftsauswahl mit Erstankunftsauswahlen für benachbarte Spuren durchführt, wobei das computerimplementierte Verfahren **dadurch gekennzeichnet ist, dass** es die folgenden Schritte einschließt:
Zentrieren eines Hauptzeitfensters um eine Vielzahl von möglichen Erstankünften für die Vielzahl von seismischen Spuren,
Nullsetzen eines Anfangs des Zeitfensters,
Transformieren eines Abschnitts der Vielzahl von Spuren im Hauptzeitfenster in eine Vielzahl von Spitzenwert-Nadelimpulsspuren mit einer Vielzahl von Spitzenwert-Nadelimpulsen, wobei das Transformieren mindestens einschließt: Nullsetzen aller negativen Abschnitte der seismischen Spuren und Nullsetzen aller Nicht-Spitzenwertabschnitte der seismischen Spuren,
Teilen des Hauptfensters in eine Vielzahl von nicht überlappenden Fenstern,
Vergleichen jedes aus der Vielzahl von Spitzenwert-Nadelimpulsen in jedem der nicht überlappenden Fenster, um zu bestimmen, welcher Spitzenwert-Nadelimpuls in dem nicht überlappenden Fenster die größte Amplitude hat,
Bestimmen einer Änderungsgeschwindigkeit der Vielzahl von Spitzenwert-Nadelimpulsen in jedem der nicht überlappenden Fenster,
Setzen einer Erstankunft für jede aus der Vielzahl von Spuren als denjenigen Spitzenwert-Nadelimpuls im nicht überlappenden Fenster, der die höchste Amplituden-Änderungsgeschwindigkeit und die höchste Amplitude der Vielzahl von Spitzenwert-Nadelimpulsen hat,
Vergleichen der Erstankunft für jede aus der Vielzahl von Spuren mit Erstankünften für benachbarte Spuren, um zu bestimmen, ob die Erstankunft eine erwünschte Auswahl ist.

8. Computerimplementiertes Verfahren nach Anspruch 7, ferner **dadurch gekennzeichnet, dass** es den folgenden Schritt einschließt:
Speichern jeder der seismischen Spuren in einer Datenbank (406), die vorbestimmte Felder hat, wobei die Felder aus einer Gruppe ausgewählt werden, die Datum, Zeit, Prozessor, Schusspunktstandort und Empfängerstandort einschließt.

9. Computerimplementiertes Verfahren nach einem der Ansprüche 7-8, ferner **dadurch gekennzeichnet, dass** es den folgenden Schritt einschließt:
Verwenden der Erstankunft, um die Vielzahl von Spuren zu filtern, so dass jegliches Signalrauschen in der Vielzahl von Spuren unterdrückt wird.

10. Computerimplementiertes Verfahren nach einem der Ansprüche 7-9, ferner **dadurch gekennzeichnet, dass** die Erstankünfte für jede aus der Vielzahl von Spuren, die von einem gemeinsamen Reflexionspunkt getrennt wurden, verglichen werden, um zu bestimmen, ob die Erstankunft die erwünschte Auswahl ist.

11. Computerimplementiertes Verfahren nach Anspruch 10, ferner **dadurch gekennzeichnet, dass** die Erstankünfte für jede aus der Vielzahl von Spuren für den gemeinsamen Reflexionspunkt in mathematischer Beziehung zueinander stehen und die mathematische Beziehung verwendet wird, um zu bestimmen, welche der Erstankünfte erwünschte Auswahlen sind.

12. Computerimplementiertes Verfahren nach einem der Ansprüche 7-11, ferner **dadurch gekennzeichnet, dass** es den folgenden Schritt einschließt:
Überlagern aller aus der Vielzahl von Spuren für einen gemeinsamen Reflexionspunkt, um eine einzelne Spur zu erzeugen.

13. Computerimplementiertes Verfahren nach einem der Ansprüche 7-12, ferner **dadurch gekennzeichnet, dass** es den folgenden Schritt einschließt:
Neuberechnen aller derjenigen Erstankünfte, die keine erwünschten Auswahlen sind.

14. Computerprogramm (506), umfassend eine Menge von Anweisungen, die in einem nichtflüchtigen Speicher (504) eines Computers, der einen Anwendungsserver (404) definiert, gespeichert ist, zum Durchführen eines Prozesses des Auswählens einer Anfangserstankunft aus mindestens einer Spur aus der Vielzahl von seismischen Spuren und eines Prozesses des Verfeinerns der Anfangserstankunftsauswahl auf der Grundlage eines Vergleichs der Anfangserstankunftsauswahl mit Erstankunftsauswahlen für benachbarte Spuren, wobei die Menge von Anweisungen, wenn sie durch den Anwendungsserver (404) ausgeführt wird, bewirkt, dass der Anwendungsserver (404) die Schritte nach einem der Ansprüche 7-13 durchführt.

## Revendications

1. Machine définissant un serveur d'application (404), le serveur d'application (404) étant apte à traiter des données sismiques en vue de détecter une pluralité de premières arrivées pour une pluralité de traces sismiques, le serveur d'application (404) étant en outre apte à exécuter un programme (506), stocké dans une mémoire non transitoire (504) du serveur d'application (404), le programme (506) mettant en oeuvre un processus de sélection d'une première arrivée initiale pour au moins une trace de la pluralité de traces sismiques et un processus d'affinage de la sélection de première arrivée initiale sur la base d'une comparaison entre la sélection de première arrivée initiale et des sélections de premières arrivées pour des traces adjacentes, le programme (506) comprenant un ensemble d'instructions destiné à mettre en oeuvre les étapes ci-dessous consistant à :
centrer une fenêtre temporelle principale autour d'une pluralité de premières arrivées potentielles pour la pluralité de traces sismiques ;
définir un début de la fenêtre temporelle sur zéro ;
transformer une partie de la pluralité de traces dans la fenêtre temporelle principale en une pluralité de traces de pics maximaux présentant une pluralité de pics maximaux, la transformation consistant au moins à définir toutes les parties négatives des traces sismiques sur zéro et toutes les parties non maximales des traces sismiques sur zéro ;
diviser la fenêtre principale en une pluralité de fenêtres sans chevauchement ;
comparer chaque pic de la pluralité de pics maximaux dans chacune des fenêtres sans chevauchement en vue de déterminer quel pic maximum dans la fenêtre sans chevauchement présente l'amplitude la plus élevée ;
déterminer un taux de variation de la pluralité de pics maximaux dans chacune des fenêtres sans chevauchement ;
définir une première arrivée, pour chaque trace de la pluralité de traces, en qualité de pic maximum dans la fenêtre sans chevauchement présentant le taux de variation le plus élevé en amplitude et l'amplitude la plus élevée de la pluralité de pics maximaux ;
comparer la première arrivée pour chaque trace de la pluralité de traces à des premières arrivées pour des traces adjacentes, en vue de déterminer si la première arrivée correspond à une sélection souhaitée ; et
recalculer l'ensemble des premières arrivées qui ne correspondent pas à des sélections souhaitées.

2. Machine selon la revendication 1, **caractérisée en outre en ce qu'**elle comporte :
une base de données (406) stockée dans la mémoire non transitoire (504) du serveur d'application (404), en vue de stocker chacune des traces sismiques dans des champs prédéterminés, les champs étant sélectionnés à partir d'un groupe incluant : une date, une heure, un processeur, un emplacement de point de tir et un emplacement de récepteur.

3. Machine selon l'une quelconque des revendications 1 à 2, **caractérisée en outre en ce que** le programme (506) met en outre en oeuvre l'étape ci-dessous consistant à :
utiliser la première arrivée en vue de filtrer la pluralité de traces, de sorte que tout bruit de signal dans la pluralité de traces est mis en sourdine.

4. Machine selon l'une quelconque des revendications 1 à 3, **caractérisée en outre en ce que** le programme (506) compare les premières arrivées pour chaque trace de la pluralité de traces générées à partir d'un point de réflexion commun en vue de déterminer si la première arrivée correspond à la sélection souhaitée.

5. Machine selon la revendication 4, **caractérisée en outre en ce que** les premières arrivées pour chacune des traces de la pluralité de traces pour le point de réflexion commun sont dans une relation mathématique entre elles et **en ce que** la relation mathématique est utilisée en vue de déterminer lesquelles des premières arrivées correspondent à des sélections souhaitées.

6. Machine selon l'une quelconque des revendications 1 à 5, **caractérisée en outre en ce que** le programme (506) met en outre en oeuvre l'étape ci-dessous consistant à :
empiler chaque trace de la pluralité de traces pour un point de réflexion unique en vue de générer une trace unique.

7. Procédé, mis en oeuvre par ordinateur, destiné à amener un ordinateur, définissant un serveur d'application (404), à mettre en oeuvre un processus de sélection d'une première arrivée initiale pour au moins une trace de la pluralité de traces sismiques et un processus d'affinage de la sélection de première arrivée initiale sur la base d'une comparaison entre la sélection de première arrivée initiale et des sélections de premières arrivées pour des traces adjacentes, le procédé mis en oeuvre par ordinateur étant **caractérisé en ce qu'**il comporte les étapes ci-dessous consistant à :
centrer une fenêtre temporelle principale autour d'une pluralité de premières arrivées potentielles pour la pluralité de traces sismiques ;
définir un début de la fenêtre temporelle sur zéro ;
transformer une partie de la pluralité de traces dans la fenêtre temporelle principale en une pluralité de traces de pics maximaux présentant une pluralité de pics maximaux, la transformation consistant au moins à définir toutes les parties négatives des traces sismiques sur zéro et toutes les parties non maximales des traces sismiques sur zéro ;
diviser la fenêtre principale en une pluralité de fenêtres sans chevauchement ;
comparer chaque pic de la pluralité de pics maximaux dans chacune des fenêtres sans chevauchement en vue de déterminer quel pic maximum dans la fenêtre sans chevauchement présente l'amplitude la plus élevée ;
déterminer un taux de variation de la pluralité de pics maximaux dans chacune des fenêtres sans chevauchement ;
définir une première arrivée, pour chaque trace de la pluralité de traces, en qualité de pic maximum dans la fenêtre sans chevauchement présentant le taux de variation le plus élevé en amplitude et l'amplitude la plus élevée de la pluralité de pics maximaux ;
comparer la première arrivée pour chaque trace de la pluralité de traces à des premières arrivées pour des traces adjacentes, en vue de déterminer si la première arrivée correspond à une sélection souhaitée.

8. Procédé mis en oeuvre par ordinateur selon la revendication 7, **caractérisé en outre en ce qu'**il inclut l'étape ci-dessous consistant à :
stocker chacune des traces sismiques dans une base de données (406) présentant des champs prédéterminés, les champs étant sélectionnés à partir d'un groupe incluant : une date, une heure, un processeur, un emplacement de point de tir et un emplacement de récepteur.

9. Procédé mis en oeuvre par ordinateur selon l'une quelconque des revendications 7 à 8, **caractérisé en outre en ce qu'**il inclut l'étape ci-dessous consistant à :
utiliser la première arrivée en vue de filtrer la pluralité de traces, de sorte que tout bruit de signal dans la pluralité de traces est mis en sourdine.

10. Procédé mis en oeuvre par ordinateur selon l'une quelconque des revendications 7 à 9, caractérisé en outre que les premières arrivées pour chaque trace de la pluralité de traces séparées d'un point de réflexion commun sont comparées en vue de déterminer si la première arrivée correspond à la sélection souhaitée.

11. Procédé mis en oeuvre par ordinateur selon la revendication 10, **caractérisé en outre en ce que** les premières arrivées pour chaque trace de la pluralité de traces pour le point de réflexion commun sont dans une relation mathématique entre elles et **en ce que** la relation mathématique est utilisée en vue de déterminer lesquelles des premières arrivées correspondent à des sélections souhaitées.

12. Procédé mis en oeuvre par ordinateur selon l'une quelconque des revendications 7 à 11, **caractérisé en outre en ce qu'**il inclut l'étape ci-dessous consistant à :
empiler chaque trace de la pluralité de traces pour un point de réflexion commun, en vue de générer une trace unique.

13. Procédé mis en oeuvre par ordinateur selon l'une quelconque des revendications 7 à 12, **caractérisé en outre en ce qu'**il inclut l'étape ci-dessous consistant à :
recalculer l'ensemble des premières arrivées qui ne correspondent pas à des sélections souhaitées.

14. Programme informatique (506) comprenant un ensemble d'instructions stocké dans une mémoire non transitoire (504) d'un ordinateur définissant un serveur d'application (404) destiné à mettre en oeuvre un processus de sélection d'une première arrivée initiale à partir d'au moins une trace de la pluralité de traces sismiques, et un processus d'affinage de la sélection de première arrivée initiale sur la base d'une comparaison entre la sélection de première arrivée initiale et des sélections de premières arrivées de traces adjacentes, l'ensemble d'instructions, lorsqu'il est exécuté par le serveur d'application (404), amenant le serveur d'application (404) à mettre en oeuvre les étapes selon l'une quelconque des revendications 7 à 13.
